# EUROPEAN PATENT APPLICATION

(11) **EP 3 477 533 A1**
(43) Date of publication of application: **01.05.2019**
(21) Application number: 18153099.9
(22) Date of filing: 23.01.2018
(51) Int. Cl.: G06K 7/00

(54) **XQD TRANSMISSION INTERFACE MEMORY CARD ADAPTER DEVICE**

(30) Priority: 31.10.2017 TW 106216140 U
(71) Applicant: Grandsky Engineering Limited, Central (HK)
(72) Inventor: Ahmad Ebrahimi, Berlin 14167 (DE)
(74) Representative: Lang, Christian

(57) **Abstract**

A XQD transmission interface memory card adapter device of the present invention primarily consists of: a casing, a XQD connector interface, at least one signal adapter, and an all-in-one card reader control chip. Side positions of the casing are provided with at least one slot that enables inserting a memory card of predetermined specifications therein. A memory card (micro memory card) of predetermined specifications is inserted and securely placed into the corresponding slot, after which the casing is used to insert into a XQD card slot of an external device (such as a notebook computer, a tablet computer, a digital camera), thereby achieving the objective of establishing an electrical connection between the at least one type of memory card of non-XQD specifications and the XQD transmission interface of the external device.

## Description

### BACKGROUND OF THE INVENTION

### (a) Field of the Invention

The present invention relates to a XQD transmission interface memory card adapter device, and more particularly to a XQD transmission interface memory card adapter device that is able to establish an electrical connection between memory cards 20 of non-XQD specifications and an XQD transmission interface, which further adds to the applicability of the XQD transmission interface, and can also be used to extend the application of micro memory cards of other specifications.

### (b) Description of the Prior Art

General flash memory has extensive application in all kinds of electronic products, and current flash memory memory cards come in a great variety of specifications. Common types of memory cards include the CF (Compact Flash) card, SD (Secure Digital) card, MMC (MultiMedia Card) card, and the SM (Smart Media) card. However, in recent years, XQD memory cards, developed to address the needs of high resolution video cameras and digital cameras, have appeared on the market, which provide 500MB/s or 1000MB/s read-write speeds.

Moreover, with the technicalization of electronic products accentuating the trend for thin and small products, in order to cater for the design requirements of electronic products, although the bias is towards relatively thin and small memory cards (micro memory cards), and there are continuous breakthroughs in the capacity of current flash memory, resulting in continuous jumps in memory card capacity, enabling high capacity memory cards to store more prolific media information and more extensive data, more importance is being placed on the memory card transmission speed.

Currently, there are already many digital electronic products (such as digital cameras, notebook computers, tablet computers, and so on) that adopt a XQD transmission interface. When the consumer is purchasing a new digital electronic product that adopts a XQD transmission interface, because the specifications of micro memory cards already owned by the consumer are not compatible with the XQD transmission interface, it is possible that the data stored on the micro memory cards cannot be accessed by the electronic product. Hence, there is the likelihood that the micro memory cards already purchased by the consumer previously to accommodate other digital electronic products are left unused, resulting in the waste of goods and materials.

### SUMMARY OF THE INVENTION

In light of the above, the primary object of the present invention lies in providing a XQD transmission interface memory card adapter device that is able to establish an electrical connection between memory cards of of diverse specifications and an XQD transmission interface, which further adds to the applicability of the XQD transmission interface, and can also be used to extend the application of micro memory cards of other specifications.

In order to achieve the above object, the XQD transmission interface memory card adapter device of the present invention basically comprises: a casing, a XQD connector interface, at least one signal adapter, and an all-in-one card reader control chip; wherein: the casing is provided with an exterior conforming to the XQD card standards organization, moreover, side positions of the casing are provided with at least one slot that enables inserting a memory card of non-XQD specifications therein. The XQD connector interface is mounted at the front end of the casing and enables the formation of an electrical connection to the XQD transmission interface of the external device. The at least one signal adapter is mounted inside the casing and enables the formation of an electrical connection to a memory card inserted into the at least one slot. And the all-in-one card reader control chip is mounted inside the casing and electrically connected between the XQD connector interface and the at least one signal adapter to enable formation of an electronic signal control center between an external device and the memory cards inserted into each of the slots.

Specifically, using the aforementioned characteristics of the primary structure of the XQD transmission interface memory card adapter device of the present invention, a memory card (micro memory card) of predetermined specifications is inserted and securely placed into the corresponding slot, after which the casing is used to insert into a XQD card slot of an external device (such as a notebook computer, a tablet computer, a digital camera) to enable establishing an electrical connection between the inserted memory card and the XQD transmission interface of the external device. Moreover, the present invention enables establishing an electrical connection between at least one type of memory card of non-XQD specifications and the XQD transmission interface of an external device, thereby achieving the objectives of increasing the applicability of the XQD transmission interface and extending the application of micro memory card cards of other specifications.

Based on the aforementioned characteristics of the primary structure, a circuit substrate is provided inside the casing, and the circuit substrate is disposed between the XQD connector interface and the at least one signal adapter. The all-in-one card reader control chip is mounted on the circuit substrate.

Based on the aforementioned characteristics of the primary structure, the XQD connector interface is provided with at least one set of differential sequence pins to enable electronic signal transmission with an external device, and is further provided with a card insertion detection pin to enable detecting whether or not a memory card has been inserted.

Based on the aforementioned characteristics of the primary structure, a rear end side position and a side end position of the casing are respectively provided with a slot.

The XQD connector interface comprises at least one power supply pin, which is used to receive an operating voltage supplied from the external device when the card insertion detection pin is in an enabled state.

The all-in-one card reader control chip is fitted with at least one set of system data transmission pins electrically connected to the set of differential sequence pins, and further provided with a first detection pin, a second detection pin, a third detection pin, and a fourth detection pin, which enable each to detect insertion of each memory card type.

Accordingly, the all-in-one card reader control chip is provided with the at least one set of system data transmission pins electrically connected to the set of differential sequence pins, and further provided with the first detection pin, the second detection pin, the third detection pin, and the fourth detection pin, which enable each to detect insertion of each memory card type. The at least one signal adapter is provided with the first type card detection pin, the second type card detection pin, the third type card detection pin, and the fourth type card detection pin; wherein the first type card detection pin is electrically connected to the card insertion detection pin and the first detection pin to enable handling the insertion of a first type memory card; the second type card detection pin is electrically connected to the card insertion detection pin and the second detection pin to enable handling the insertion of a second type memory card; the third type card detection pin is electrically connected to the card insertion detection pin and the third detection pin to enable handling the insertion of a third type memory card; and the fourth type card detection pin is electrically connected to the card insertion detection pin and the fourth detection pin to enable handling the insertion of a fourth type memory card.

The first type memory card can be either a SmartMedia, xD, xD type M, or an xD type H card; the second type memory card can be either a MS, MS Pro, MS Pro HighSpeed, MS Pro Ultra II, MS Pro Extreme, MS Pro Extreme III, MS-Duo, MS-Duo HighSpeed, MS-Pro Duo, MS-Pro Duo HighSpeed, MS-Pro Duo Ultra, MS-Pro Duo Ultra II, MS Duo-ROM, MS-Pro Duo MARK2, MS Pro-HG Duo HX, MS Pro-HG Duo, or a MS Pro-HG Duo Ultra card; the third type memory card can be either a SD, SD Pro, SD Plus, SD Ultra, SD Gaming, SD Extreme, SD High Capacity (SDHC), SDHC Ultra, SDHC Extreme, SDXC, SDXC Ultra, MMC-I, MMC-II, HS-MMC, MMC plus, Mini SD*, Mini SDHC*, MMCmobile*, MMC Micro*, RS-MMC*, RS-MMC 4.0*, RS-MMC HS*, or a DV RS MMC* card; and the fourth type memory card can be either a MicroSD, Micro SDHC, Micro SDHC Ultra, T-Flash, MMCmicro, or a MS Micro (M2) card.

The XQD connector interface uses a PCI Express interface configured as the working interface.

To enable a further understanding of said objectives and the technological methods of the invention herein, a brief description of the drawings is provided below followed by a detailed description of the preferred embodiments.

### BRIEF DESCRIPTION OF THE DRAWINGS

FIG. 1 is an external three-dimensional view of an XQD transmission interface memory card adapter device of the present invention.
FIG. 2 is a circuit block schematic view of the XQD transmission interface memory card adapter device circuit of the present invention.
FIG. 3 is an external three-dimensional view from another viewing angle of the XQD transmission interface memory card adapter device of the present invention.
FIG. 4 is a schematic view of the XQD transmission interface memory card adapter device circuit in use according to the present invention.

### DETAILED DESCRIPTION OF THE PREFERRED EMBODIMENTS

Regarding the characteristics of the present invention, a clear understanding can be gained by referring to the drawings and the detailed description of the embodiments below.

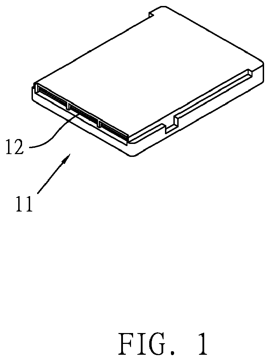

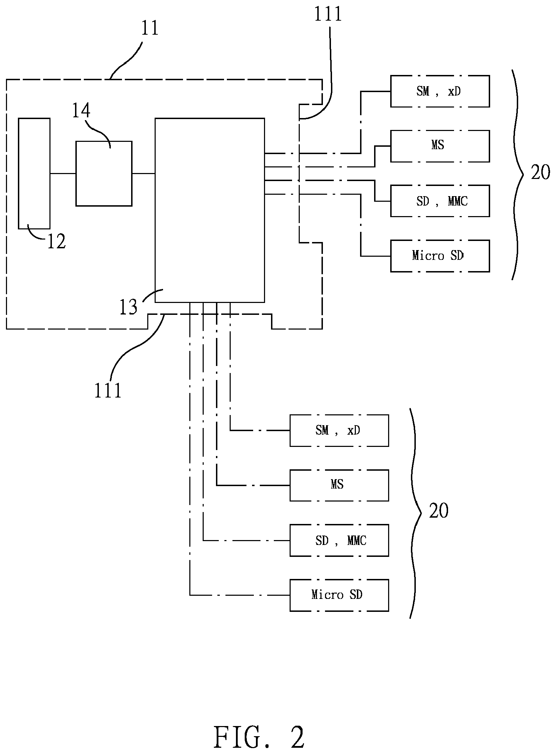

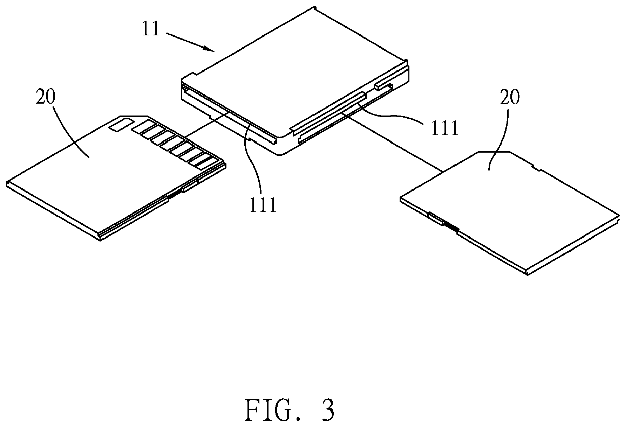

Referring to FIGS. 1 to 3, which show an XQD transmission interface memory card adapter device of the present invention basically comprising: a casing 11, an XQD connector interface 12, at least one signal adapter 13, and an all-in-one card reader control chip 14; wherein:
The casing 11 is provided with an exterior conforming to the XQD card standards organization; moreover, at least one slot 111, which enables inserting a memory card 20 of predetermined specifications therein, is provided on the side position of the casing 11. In actual use, as shown in the diagrams, the rear end side position and the side end position of the casing 11 are respectively provided with the slot 111.

The XQD connector interface 12 is mounted at the front end of the casing 11 and enables the formation of an electrical connection to an XQD transmission interface of an external device (such as a digital camera, a notebook computer, or a tablet computer). In actual use, the XQD connector interface 12 uses a PCI Express interface configured as the working interface. In addition, the XQD connector interface is further provided with at least one set of differential sequence pins to enable electronic signal transmission with an external device, and is provided with a card insertion detection pin to enable detecting whether or not a memory card has been inserted, as well as comprising at least one power supply pin, which is used to receive an operating voltage supplied from the external device when the card insertion detection pin is in an enabled state.

The at least one signal adapter 13 is mounted inside the casing 11 and enables the formation of an electrical connection to a memory card 20 inserted into the at least one slot 111.

Regarding the all-in-one card reader control chip 14 mounted inside the casing 11 and electrically connected between the XQD connector interface 12 and the at least one signal adapter 13 to enable formation of an electronic signal control center between an external device and the memory cards 20 inserted into each of the slots 111, in actual use, a circuit substrate can be further mounted inside the casing 11, with the circuit substrate located between the XQD connector interface 12 and the at least one signal adapter13. The all-in-one card reader control chip 14 can then be selectively mounted on the circuit substrate or mounted on the circuit substrate using a bottom surface method.

Furthermore, the all-in-one card reader control chip 14 can be fitted with at least one set of system data transmission pins electrically connected to the set of differential sequence pins, and further provided with a first detection pin, a second detection pin, a third detection pin, and a fourth detection pin, which enable each to detect insertion of each memory card type.

Accordingly, the all-in-one card reader control chip 14 of the present invention has the structural configuration provided with the at least the set of system data transmission pins electrically connected to the set of differential sequence pins, and provided with the first detection pin, the second detection pin, the third detection pin, and the fourth detection pin, which enable each to detect insertion of each memory card type.

The at least one signal adapter 13 thus operates in coordination with the first type card detection pin, the second type card detection pin, the third type card detection pin, and the fourth type card detection pin; wherein the first type card detection pin is electrically connected to the card insertion detection pin and the first detection pin to enable handling the insertion of a first type memory card; the second type card detection pin is electrically connected to the card insertion detection pin and the second detection pin to enable handling the insertion of a second type memory card; the third type card detection pin is electrically connected to the card insertion detection pin and the third detection pin to enable handling the insertion of a third type memory card; and the fourth type card detection pin is electrically connected to the card insertion detection pin and the fourth detection pin to enable handling the insertion of a fourth type memory card.

Regarding memory card types, the first type memory card can be either a SmartMedia, xD, xD type M, or an xD type H card; the second type memory card can be either a MS, MS Pro, MS Pro HighSpeed, MS Pro Ultra II, MS Pro Extreme, MS Pro Extreme III, MS-Duo, MS-Duo HighSpeed, MS-Pro Duo, MS-Pro Duo HighSpeed, MS-Pro Duo Ultra, MS-Pro Duo Ultra II, MS Duo-ROM, MS-Pro Duo MARK2, MS Pro-HG Duo HX, MS Pro-HG Duo, or a MS Pro-HG Duo Ultra card; the third type memory card can be either a SD, SD Pro, SD Plus, SD Ultra, SD Gaming, SD Extreme, SD High Capacity (SDHC), SDHC Ultra, SDHC Extreme, SDXC, SDXC Ultra, MMC-I, MMC-II, HS-MMC, MMC plus, Mini SD*, Mini SDHC*, MMCmobile*, MMC Micro*, RS-MMC*, RS-MMC 4.0*, RS-MMC HS*, or a DV RS MMC* card; and the fourth type memory card can be either a MicroSD, Micro SDHC, Micro SDHC Ultra, T-Flash, MMCmicro, or a MS Micro (M2) card.

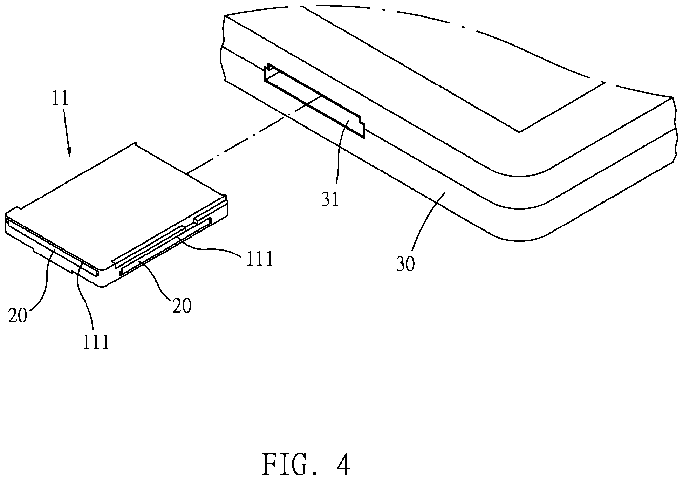

In principle, when using the present invention, as depicted in FIG. 4, the memory card 20 (micro memory card) of predetermined specifications is inserted and securely placed into the corresponding slot 111, after which the casing 11 is used to insert into a XQD card slot 31 of an external device 30 (such as a notebook computer, a tablet computer, a digital camera), whereupon an electrical connection is established between the inserted memory card 20 and the XQD transmission interface of the external device 30. The external device 30 is then able to proceed with data reading of the inserted memory card 20 and data writing thereon, thereby enabling achieving the objective of respectively establishing an electrical connection between diverse types of memory cards of non-XQD specifications inserted into different slots and the XQD transmission interface of an external device.

Moreover, the present invention simultaneously enables establishing an electrical connection between at least two memory cards inserted into different slots and the XQD transmission interface of an external device, which apart from increasing the applicability of the XQD transmission interface, the present invention can be also used to extend the application of micro memory card cards of other specifications, thereby increasing the applicability of memory cards and avoid causing unnecessary wastage of goods and materials.

The present invention provides a preferred practicable XQD transmission interface memory card adapter device, and accordingly a new patent application is proposed herein. The technical contents of the present invention and technical features thereof are as disclosed above.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A XQD transmission interface memory card adapter device, comprising: a casing 11, a XQD connector interface 12, at least one signal adapter 13, and an all-in-one card reader control chip 14; wherein:
the casing 11 is provided with an exterior conforming to the XQD card standards organization, moreover, side positions of the casing 11 are provided with at least one slot 111 that enables inserting a memory card 20 of non-XQD specifications therein;
the XQD connector interface 12 is mounted at the front end of the casing 11 and enables establishing an electrical connection to the XQD transmission interface of an external device 30;
the at least one signal adapter 13 is mounted inside the casing 11 and enables establishing an electrical connection to a memory card 20 inserted into the at least one slot 111;
the all-in-one card reader control chip 14 is mounted inside the casing 11 and electrically connected between the XQD connector interface 12 and the at least one signal adapter 13 to enable formation of an electronic signal control center between an external device and the memory cards 20 inserted into each of the slots 111.

2. The XQD transmission interface memory card adapter device according to claim 1, wherein a circuit substrate is provided inside the casing 11, and the circuit substrate is disposed between the XQD connector interface 12 and the at least one signal adapter 13, and the all-in-one card reader control chip 14 is mounted on the circuit substrate.

3. The XQD transmission interface memory card adapter device according to claim 1, wherein the XQD connector interface 12 is provided with at least one set of differential sequence pins to enable electronic signal transmission with an external device 30, and is further provided with a card insertion detection pin to enable detecting whether or not a memory card 20 has been inserted.

4. The XQD transmission interface memory card adapter device according to claim 1, wherein a rear end side position and a side end position of the casing 11 are respectively provided with a slot 111.

5. The XQD transmission interface memory card adapter device according to claim 3, wherein the XQD connector interface 12 comprises at least one power supply pin, which is used to receive an operating voltage supplied from an external device 30 when the card insertion detection pin is in an enabled state.

6. The XQD transmission interface memory card adapter device according to any one of the claims 1 to 4, wherein the all-in-one card reader control chip 14 is fitted with at least one set of system data transmission pins electrically connected to the set of differential sequence pins, and further provided with a first detection pin, a second detection pin, a third detection pin, and a fourth detection pin, which enable each to detect insertion of each memory card type.

7. The XQD transmission interface memory card adapter device according to any one of the claims 1 to 4, wherein the all-in-one card reader control chip 14 is provided with the at least one set of the system data transmission pins electrically connected to the set of differential sequence pins, and further provided with the first detection pin, the second detection pin, the third detection pin, and the fourth detection pin, which enable each to detect insertion of each memory card type; the at least one signal adapter is provided with the first type card detection pin, the second type card detection pin, the third type card detection pin, and the fourth type card detection pin; wherein the first type card detection pin is electrically connected to the card insertion detection pin and the first detection pin to enable handling the insertion of a first type memory card 20; the second type card detection pin is electrically connected to the card insertion detection pin and the second detection pin to enable handling the insertion of a second type memory card 20; the third type card detection pin is electrically connected to the card insertion detection pin and the third detection pin to enable handling the insertion of a third type memory card 20; and the fourth type card detection pin is electrically connected to the card insertion detection pin and the fourth detection pin to enable handling the insertion of a fourth type memory card 20.

8. The XQD transmission interface memory card adapter device according to claim 7, wherein the first type memory card 20 is either a SmartMedia, xD, xD type M, or an xD type H card; the second type memory card 20 is either a MS, MS Pro, MS Pro HighSpeed, MS Pro Ultra II, MS Pro Extreme, MS Pro Extreme III, MS-Duo, MS-Duo HighSpeed, MS-Pro Duo, MS-Pro Duo HighSpeed, MS-Pro Duo Ultra, MS-Pro Duo Ultra II, MS Duo-ROM, MS-Pro Duo MARK2, MS Pro-HG Duo HX, MS Pro-HG Duo, or a MS Pro-HG Duo Ultra card; the third type memory card 20 is either a SD, SD Pro, SD Plus, SD Ultra, SD Gaming, SD Extreme, SD High Capacity (SDHC), SDHC Ultra, SDHC Extreme, SDXC, SDXC Ultra, MMC-I, MMC-II, HS-MMC, MMC plus, Mini SD*, Mini SDHC*, MMCmobile*, MMC Micro*, RS-MMC*, RS-MMC 4.0*, RS-MMC HS*, or a DV RS MMC* card; and the fourth type memory card 20 is either a MicroSD, Micro SDHC, Micro SDHC Ultra, T-Flash, MMCmicro, or a MS Micro (M2) card.

9. The XQD transmission interface memory card adapter device according to any one of the claims 1 to 4, wherein the XQD connector interface 12 uses a PCI Express interface configured as the working interface.
